(19)

Europäisches
Patentamt
European
Patent Office
Office européen
des brevets

(11) **EP 2 933 287 A1**

(12) **EUROPEAN PATENT APPLICATION**
published in accordance with Art. 153(4) EPC

(43) Date of publication:
**21.10.2015 Bulletin 2015/43**

(21) Application number: **13863784.8**

(22) Date of filing: **09.12.2013**

(51) Int Cl.:
*C08J 9/26* (2006.01)   *B32B 5/18* (2006.01)
*B32B 27/34* (2006.01)   *H01B 3/42* (2006.01)
*H01B 17/56* (2006.01)   *H02K 3/30* (2006.01)

(86) International application number:
**PCT/JP2013/082984**

(87) International publication number:
**WO 2014/097920 (26.06.2014 Gazette 2014/26)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **17.12.2012 JP 2012274842**

(71) Applicant: **Nitto Denko Corporation Ibaraki-shi, Osaka 567-8680 (JP)**

(72) Inventors:
• **TAKEKAWA, Yumi**
  **Ibaraki-shi**
  **Osaka 567-8680 (JP)**

• **YAKUWA, Shinpei**
  **Ibaraki-shi**
  **Osaka 567-8680 (JP)**
• **KASAGI, Tomoyuki**
  **Ibaraki-shi**
  **Osaka 567-8680 (JP)**
• **IKENAGA, Hiroko**
  **Ibaraki-shi**
  **Osaka 567-8680 (JP)**

(74) Representative: **Sajda, Wolf E.**
  **Meissner, Bolte & Partner GbR**
  **Postfach 86 06 24**
  **81633 München (DE)**

(54) **POLYETHERIMIDE POROUS BODY AND METHOD FOR PRODUCING SAME**

(57)    Provided are: a polyetherimide porous body which has a low relative permittivity and is not easily cracked (or is excellent in cracking resistance) when folded, and a method for producing the porous body. This polyetherimide porous body comprises a polyetherimide crosslinked body and has a gel fraction of 10 % or more, an average cell diameter of 8 μm or less, a volume porosity of 30 % or more and an insulation breakdown voltage of 30 kV/mm or more.

EP 2 933 287 A1

**Description**

TECHNICAL FIELD

The present invention relates to a polyetherimide porous body which has fine cells, and is low in relative permittivity and excellent in heat resistance; and a method for producing the porous body. The polyetherimide porous body of the invention is useful for, for example, an electrically insulating sheet integrated into, for example, a motor for automobiles or industries that involves inverter control.

BACKGROUND ART

A plastic film has a high electrical insulating property, so that such a film has been hitherto used in components or members for which reliability is required, for example, electrical appliances or electronic components such as circuit boards or motors.

With a reduction in the size of electronic and electrical appliances, and a rise in the performance thereof, motors for automobiles or industries that have widely been used recently are motors having a structure that can be inverter-controlled at a high voltage.

However, a high surge voltage generated from the inverter produces an effect on the motors. Thus, their insulator has been required to have a high reliability.

An example of measures against a surge voltage is, besides an improvement in the reliability of electrical insulating property, an intentional reduction in the relative permittivity of the insulator.

In general, the relative permittivity of plastic materials is determined in accordance with their molecular skeleton. Thus, as an attempt for reducing the relative permittivity, a method of modifying the molecular skeleton is supposable. However, even if the molecular skeleton is modified, a limit is imposed on the reduction in the relative permittivity.

As other attempts for reducing the relative permittivity, various methods have been suggested of using the relative permittivity "1" of air, making a plastic material porous, and controlling the relative permittivity of the porous material in accordance with the porosity of the material.

Conventional ordinary methods for producing a porous body are classified into a wet method, a dry method and others. The dry method is classified into a physical method and a chemical method.

A physical method is generally a method of dispersing a low-boiling-point liquid (foaming agent), such as a chlorofluorocarbon or hydrocarbon liquid, in a polymer, and then heating the liquid-dispersed polymer, thereby volatilizing the foaming agent to form cells.

A chemical method is a method of adding a foaming agent to a polymer, thermally decomposing the foaming agent to generate a gas, and forming cells by effect of the generated gas to yield a porous body.

Furthermore, in recent years, for a porous body small in cell diameter and high in cell density, a method has been suggested which includes dissolving a gas, such as nitrogen or carbon dioxide, in a polymer under high pressure, releasing the pressure, and then heating the gas to a temperature around the glass transition temperature or softening point of the polymer to form cells.

Such a foaming method is a method of producing nuclei from a thermodynamically unstable state, and expanding and growing the nuclei to form cells. The method has an advantage of yielding a porous body having unprecedented fine pores.

For example, Patent Document 1 suggests a method of applying the foaming method to a polyetherimide to produce a foam small in density and large in mechanical strength.

Moreover, for example, Patent Document 2 suggests that the foaming method is applied to a styrene-based resin having a syndiotactic structure to yield a foam having a cell size of 0.1 $\mu$m to 20 $\mu$m, and this foam is used as an insulator for an electrical circuit board.

Furthermore, for example, Patent Document 3 suggests a low-relative permittivity plastic insulating film which includes a porous plastic material having a porosity of 10 % by volume or more, and has a heat-resistant temperature of 100 °C or higher and a relative permittivity of 2.5 or less.

Additionally, for example, Patent Document 4 suggests a method for producing a porous body that is characterized in that, from a polymer solution having a microphase-separated structure in which discontinuous phases having an average diameter less than 10 $\mu$m are dispersed in a polymeric continuous phase, a component constituting the discontinuous phases is removed by at least one operation selected from evaporation and decomposition, and an extracting operation, thereby making the polymer porous.

Such an electrically insulating sheet is folded when integrated into a motor or some other. However, conventional electrically insulating sheets made of a porous body have a problem of being easily cracked when folded, so as to be remarkably lowered in insulation breakdown voltage.

PRIOR ART DOCUMENTS

PATENT DOCUMENTS

      Patent Document 1: JP-A-6-322 168
      Patent Document 2: JP-A-10-045 936
      Patent Document 3: JP-A-9-100 363
      Patent Document 4: JP-A-2001-081 225

SUMMARY OF THE INVENTION

PROBLEMS TO BE SOLVED BY THE INVENTION

In light of the above-mentioned problem, the present invention has been made. An object thereof is to provide a polyetherimide porous body which is low in relative permittivity and is not easily cracked (or is excellent in cracking resistance) when folded, and a method for producing the porous body.

MEANS FOR SOLVING THE PROBLEMS

The invention is related to a polyetherimide porous body (hereinafter, simply referred to as "porous body"), comprising a polyetherimide crosslinked body, and having a gel fraction of 10 % or more, an average cell diameter of 8 $\mu$m or less, a volume porosity of 30 % or more, and an insulation breakdown voltage of 30 kV/mm or more.

The inventors have found out that a porous body low in relative permittivity and excellent in cracking resistance is obtained by using a polyetherimide crosslinked body to form the porous body, adjusting the gel fraction of the porous body to 10 % or more, and further making the porous body to have the above-mentioned porous structure.

If the gel fraction is less than 10 %, the porous body cannot be improved in cracking resistance. Therefore, the porous body is easily cracked when folded, and is remarkably lowered in insulation breakdown voltage.

If the average cell diameter is more than 8 $\mu$m, the porous body cannot be improved in cracking resistance. Therefore, the porous body is easily cracked when folded, and is remarkably lowered in insulation breakdown voltage. Moreover, the porous body is not easily lowered in relative permittivity, or is lowered in mechanical strength.

If the volume porosity is less than 30 %, the porous body is heightened in rigidity, not to be easily folded. Alternatively, even when folded, the porous body easily returns to an original shape thereof when external force is taken away therefrom.

Accordingly, the porous body (electrically insulating sheet) is not easily attached to a motor or some other device, or the attachment precision is lowered. Moreover, the porous body is not easily lowered in its relative permittivity.

When the insulation breakdown voltage is 30 kV/mm or more, the porous body can be effectively prevented from undergoing insulation breakdown by a surge voltage in the use of the porous body as an electrically insulating sheet of a motor or some other device.

The polyetherimide crosslinked body is preferably a crosslinked body in which a polyetherimide is crosslinked with a polyamine having two or more amino groups. The use of the polyamine as a crosslinking agent makes it possible to further improve the porous body in cracking resistance.

The porous body preferably has a cracking frequency of 20 % or less, the frequency being represented by the following equation, and an insulation breakdown voltage retention of 60 % or more after the porous body has been folded. When the cracking frequency is 20 % or less and the insulation breakdown voltage retention is 60 % or more, the porous body can maintain the insulation breakdown voltage thereof at a high level even when folded.

$$\text{Cracking frequency (\%)} = \text{``Total crack length in the folded part of the porous body''}/\text{``Length of the folded part''} \times 100.$$

The porous body of the present invention is suitably usable for an electrically insulating sheet for a motor.

Also, the present invention relates to an electrically insulating laminated sheet for a motor, which has a sheet member over at least one surface of the polyetherimide porous body.

Further, the present invention relates to a method for producing the polyetherimide porous body, comprising the steps of:

applying, over a substrate, a polymer solution comprising the polyetherimide, a phase-separating agent that is phase-separable from the polyetherimide, and a polyamine having two or more amino groups, and drying the applied solution to produce a phase-separated structure having a microphase-separated structure; and

removing the phase-separating agent from the phase-separated structure to produce the porous body.

EFFECT OF THE INVENTION

The porous body of the present invention is excellent in cracking resistance; thus, the porous body is not remarkably lowered in its insulation breakdown voltage even when folded. Moreover, the porous body of the invention is formed using a polyetherimide crosslinked body to have a microporous structure; thus, the porous body has features of being excellent in heat resistance and insulating property, and further being low in relative permittivity.

For this reason, the porous body of the present invention is suitably usable for an electrically insulating sheet integrated into, for example, a motor for automobiles or industries that involves inverter control.

MODE FOR CARRYING OUT THE INVENTION

The polymer used as the raw material of the porous body of the present invention, that is, the polymer constituting the continuous phase of the microphase-separated structure is mainly a polyetherimide crosslinked body. As the polyetherimide, any known species thereof is usable without especial restriction.

Examples of a commercially available product thereof include trade names "Ultem 1000-1000" and "Ultem XH-6050" manufactured by SABIC Innovative Plastics. As far as the object of the present invention is not impaired, for example, the following may be used together as raw materials of the porous body: polyamide, polycarbonate, polybutylene terephthalate, polyethylene terephthalate, polyphenylene sulfide, polysulfone, polyethersulfone, polyetheretherketone, polyamideimide and polyimide.

As a crosslinking agent for crosslinking the polyetherimide, any known species thereof is usable without especial restriction. The crosslinking agent is in particular preferably a polyamine having two or more amino groups. The polyamine is usable without being especially limited as far as it is a compound through which imide groups of the polyetherimide are ring-opened to form intermolecular crosslinkages of the polymer.

Examples of the polyamine include aliphatic polyamines such as iminobispropylamine, bis(hexamethylene)triamine, 1,3,6-trisaminomethylhexane, polymethylenediamine, trimethylhexamethylenediamine, polyetherdiamine, and 1,3-bis(3-aminopropyl)tetramethyldisiloxane; alicyclic polyamines such as isophoronediamine, menthanediamine, N-aminoethylpiperazine, 3,9-bis(3-aminopropyl)-2,4,8,10-tetraoxaspiro(5,5)undeca ne adduct, bis(4-amino-3-methylcyclohexyl)methane, and bis(4-aminocyclohexyl)methane; and amino-modified silicones. These may be used alone or in the form of a mixture of two or more thereof.

The addition amount of the polyamine is preferably an amount permitting the molar equivalent of its amino groups to be from 0.001 to 2 per molar equivalent of the imide groups, more preferably an amount permitting that of the amino groups to be from 0.005 to 0.5 per molar equivalent of the imide groups.

If the molar equivalent of the amino groups is less than 0.001, the ring-opening reaction of the imide groups does not advance sufficiently to tend not to yield the target polyetherimide crosslinked body easily.

Conversely, if the molar equivalent of the amino groups is more than 2, at the time of mixing the raw materials together, the mixture is gelated so that the mixture is not easily made into a film form.

The phase-separating agent is not particularly limited as far as the agent is a component which constitutes the discontinuous phase of the microphase-separated structure, and which can form the microphase-separated structure when the above-mentioned polymer is mixed with this agent and be extracted with an extracting solvent.

Examples of the phase-separating agent include, for example, polyalkylene glycols such as polyethylene glycol and polypropylene glycol; those polyalkylene glycols terminated at one or each end by methyl or terminated at one or each end by (meth)acrylate; urethane prepolymers; and (meth)acrylate-based compounds such as phenoxypolyethylene glycol (meth)acrylate, ε-caprolactone (meth)acrylate, trimethylolpropane tri(meth)acrylate, dipentaerythritol hexa(meth)acrylate, urethane (meth)acrylates, epoxy (meth)acrylates, and oligoester (meth)acrylates. These phase-separating agents can be used alone or in combination of two or more thereof.

The molecular weight of the phase-separating agent is not particularly limited. The weight-average molecular weight thereof is preferably 10000 or less (for example, about 100 to 10000), more preferably from 100 to 2000 since an operation of extracting and removing the agent is easy. If the weight-average molecular weight is less than 100, the agent does not undergo phase-separation easily from the cured body of the polymer.

Conversely, if the weight-average molecular weight is more than 10000, the microphase-separated structure becomes too large or the extraction and removal of the phase-separating agent from the phase-separated structure is difficult. In many cases, an oligomer is used as the phase-separating agent.

The addition amount of the phase-separating agent may be appropriately selected in accordance with a combination of the phase-separating agent with the above-mentioned polymer. In order to produce a porous body having an average cell diameter of 8 μm or less and a volume porosity of 30 % or more, the phase-separating agent is preferably used in an amount from 20 to 300 parts by weight, more preferably from 30 to 100 parts by weight for 100 parts by weight of the polymer.

A polymer solution is prepared by mixing the polymer, the phase-separating agent and a solvent together. The solvent is, for example, an amide such as N-methyl-2-pyrrolidone, N,N-dimethylacetamide, or N,N-dimethylformamide.

The use amount of the solvent is from about 150 to 2000 parts by weight, preferably from 150 to 400 parts by weight, more preferably from 300 to 350 parts by weight for 100 parts by weight of the polymer.

An additive other than the phase-separating agent may be added to the polymer solution. Examples of the additive include a tackifier resin, a flame retardant, an antioxidant, an inorganic filler, a bubble nucleating agent, a crystal nucleating agent, a thermal stabilizer, an optical stabilizer, an ultraviolet absorber, a plasticizer, a lubricant, a pigment, a crosslinking agent, a crosslinking aid, and a silane coupling agent.

In the method of the present invention for producing a porous body, the polymer solution is initially applied onto a substrate, and the applied solution is dried to produce a phase-separated structure (in the form of, for example, a sheet or film) having a microphase-separated structure.

The substrate is not particularly limited as long as it has a smooth surface. A continuous applying method includes, for example, a wire bar method, a kiss coating method, and a gravure method. The method of applying in a batch system includes, for example, an applicator method, a wire bar method, and a knife coater method.

The polymer solution applied onto the substrate is dried to vaporize the solvent to yield a phase-separated structure in which the phase-separating agent is microphase-separated. The temperature at which the solvent is vaporized (dried) is not particularly limited. It is advisable to adjust the temperature appropriately in accordance with the used solvent species.

The temperature is usually from 60 °C to 200 °C. The microphase-separated structure is usually a sea-island structure in which the polymer and the phase-separating agent are in a sea form and in an island form, respectively.

The ring-opening and crosslinking reaction between the polyetherimide and the polyamine advances in the solvent-vaporizing step. It is therefore unnecessary to conduct any especial treatment for conducting the ring-opening and crosslinking reaction after the vaporization of the solvent.

Next, the porous body is prepared by removing the phase-separating agent that was microphase-separated from the phase-separated structure. In addition, the phase-separated structure may be previously peeled off from the substrate before removing the phase-separating agent.

The method to remove the phase-separating agent from the phase-separated structure is not particularly limited, but includes preferably a method of extracting the phase-separating agent with a solvent. It is necessary to use a solvent that is a good solvent for the phase-separating agent and does not dissolve the polymer, and includes, for example, water, organic solvents (e.g., toluene, ethanol, ethyl acetate, and heptane), carbon dioxide fluid (e.g., liquefied carbon dioxide, subcritical carbon dioxide, and supercritical carbon dioxide).

The carbon dioxide fluid can remove the phase-separating agent efficiently because they can easily penetrate into the phase-separated structure. The extraction may be attained by using water or the organic solvent together with the carbon dioxide fluid.

In the case of using the carbon dioxide fluid as an extraction solvent, a pressure vessel is usually used. The pressure vessel that can be use includes, for example, a batch type pressure vessel and a pressure vessel provided with a pressure-resistant device for feeding and winding a sheet. The pressure vessel is usually provided with a carbon dioxide fluid supply means constituted by pump, piping, valve and the like.

The extraction of the phase-separating agent may be carried out by feeding/discharging continuously carbon dioxide fluid into/from a pressure vessel in which the phase-separated structure is placed, or may be carried out in a pressure vessel in a closed system (in a state where the charged phase-separated structure and carbon dioxide fluid do not move to the outside of the vessel).

In the case of using supercritical carbon dioxide and subcritical carbon dioxide, swelling of the phase-separated structure is promoted and diffusion coefficient of the insolubilized phase-separating agent is improved, resulting in efficient removal of the phase-separating agent from the phase-separated structure.

In the case of using liquefied carbon dioxide, the diffusion coefficient decreases, but the phase-separating agent is efficiently removed from the phase-separated structure because of improved permeability of the liquefied carbon dioxide to the phase-separated structure.

It is sufficient for the temperature and the pressure when the phase-separating agent is extracted with the carbon dioxide fluid to permit carbon dioxide to be made into each of the states (liquid, subcritical or supercritical state). The temperature and the pressure are usually from 20 °C to 230 °C, and from 7.3 MPa to 100 MPa, respectively, preferably from 25 °C to 200 °C, and from 10 MPa to 50 MPa, respectively.

It is necessary to appropriately adjust the extraction time, depending on the temperature and pressure during extraction, the added amount of the phase-separating agent, and the thickness of the phase-separated structure, but the extraction time is usually 1 to 15 hours, preferably 2 to 15 hours.

The extraction method using water or organic solvent includes, for example, a method of immersing the phase-separated structure in water or organic solvent, a method of spraying water or organic solvent to the phase-separated structure, and the like.

From the viewpoint of removal efficiency of the phase-separating agent, such an immersing method is preferred. In addition, the phase-separating agent can be removed efficiently by replacing water or an organic solvent over a few times or performing the extraction with stirring.

After the production of the porous body by the extraction and removal of the phase-separating agent, the porous body may be subjected to drying treatment and others.

The gel fraction of the porous body of the present invention is 10 % or more, preferably 25 % or more, more preferably 60 % or more.

The porous body of the present invention has an average cell diameter of 8 $\mu$m or less, preferably 0.1 to 5 $\mu$m, more preferably 0.1 to 3 $\mu$m.

The volume porosity of the porous body of the present invention is 30 % or more, preferably 35 % to 80 %, more preferably 40 % to 70 %.

The insulation breakdown voltage of the porous body of the present invention is 30 kV/mm or more, preferably 40 kV/mm or more. The upper limit of the insulation breakdown voltage is usually about 200 kV/mm.

The relative permittivity of the porous body of the present invention is about 1.4 to 2.5, preferably 1.4 to 1.9.

About the porous body of the present invention, the cracking frequency thereof is preferably 20 % or less, more preferably 10 % or less, the frequency being represented by the following equation:

$$\text{Cracking frequency (\%)} = \text{``Total crack length in the folded part of the porous body''/``Length of the folded part''} \times 100.$$

About the porous body of the present invention, the insulation breakdown voltage retention is preferably 60 % or more, more preferably 70 % or more after the porous body is folded.

The form of the porous body may be appropriately varied in accordance with the usage thereof. When the form is a sheet or film form, the thickness is usually 1 to 500 $\mu$m, preferably 10 to 250 $\mu$m, more preferably 30 to 200 $\mu$m.

The porous body of the present invention is suitably usable for an electrically insulating sheet for a motor.

The electrically insulating laminated sheet of the present invention for a motor is a sheet having a sheet member over at least one surface of the electrically insulating sheet for a motor, which is the porous body.

The form of the electrically insulating laminated sheet for a motor is not particularly limited, and may be a sheet or tape form. The electrically insulating laminated sheet may be punched out into a required form, or may be three-dimensionally bent.

By fitting the sheet member, the electrically insulating laminated sheet for a motor is improved in strength and lubricity.

Examples of the sheet member include a nonwoven fabric, paper and a film. In order to improve the electrically insulating laminated sheet in heat resistance, it is preferred to use a nonwoven fabric, paper, or a film having heat resistance.

The thickness of the sheet member is not particularly limited, and is usually 5 to 100 $\mu$m, preferably 5 to 50 $\mu$m. If the thickness of the sheet member is less than 5 $\mu$m, the sheet member does not easily give strength to the electrically insulating laminated sheet for a motor.

If the thickness is more than 100 $\mu$m, the power of the motor is lowered by a decline in the winding number of its coil line, or the electrically insulating laminated sheet for a motor is not easily made low in relative permittivity.

EXAMPLES

The present invention will be described below by way of Examples, without intending to limit the present invention thereto in any way.

Measurement and Evaluation Method

Gel Fraction

The porous body (0.5 g) was wrapped with a resin film (TEMISH NTF1133, manufactured by Nitto Denko Corporation), and the wrapped body was put in a container. Thereto was added about 50 mL of N-methyl-2-pyrrolidone as a solvent. This system was stirred with a stirrer for 24 hours. Thereafter, the solvent was wiped away from the resin film.

The porous body was heated and dried at 240 °C for 3 hours, and then the weight of the resultant gel body was measured. The gel fraction was calculated out in accordance with the following expression:

$$\text{Gel fraction (\%)} = (\text{Weight of the gel body/Weight of the porous body}) \times 100.$$

Average Cell Diameter

The porous body was cooled with liquid nitrogen, and was cut with a cutting tool perpendicularly to its sheet plane to prepare an evaluation sample. The cut surface of the sample was subjected to Pd-Pt vapor deposition treatment. The cut surface was observed with a scanning electron microscope (SEM) ("JSM-6510LV," manufactured by JEOL Ltd.). An image thereof was binarized with image processing software ("NanoHunter NS2K-Lt" manufactured by Nanosystem Corporation) to be separated into a cell region and a resin region.

The respective maximum horizontal string lengths of the cells were measured. About 40 cells that are cells from a cell having the largest cell diameter to a cell having the 40$^{th}$ largest cell diameter, the average value of the cell diameters was calculated out. The value was defined as the average cell diameter.

Volume Porosity

The specific gravities of the porous body and non-porous body were measured respectively with an electronic gravimeter (MD-300S, manufactured by Alfa Mirage Co., Ltd.), and the volume porosity was calculated from the following equation:

$$\text{Volume porosity (\%)} = \{1 - (\text{Specific gravity of porous body})/(\text{Specific gravity of non-porous body})\} \times 100.$$

Insulation Breakdown Voltage

By the method in accordance with the standard as defined in JIS C2110, the insulation breakdown voltage of the porous body was measured at a pressure rise rate of 1 kV/sec.

Cracking frequency

From a produced porous body, a sample is cut away which has a size of 25 mm (in the TD direction) x 50 mm. The sample is folded in half (25 mm x 25 mm). An area of 25 mm x 10 mm in the sample from the resultant folded part is pressed at a pressure of 2 MPa for one second using an oil hydraulic press.

Thereafter, the total crack length of the folded part of the sample is measured using an optical microscope (ELIPSE ME600, manufactured by Nikon Corporation) with a magnifying power of 100 to 500. The cracking frequency (%) is calculated in accordance with the following equation:

$$\text{Cracking frequency (\%)} = \text{"Total crack length in the folded part of the porous body"}/\text{"Length of the folded part"} \times 100.$$

Insulation breakdown voltage retention

From a produced porous body, a sample is cut away which has a size of 25 mm (in the TD direction) x 50 mm. The insulation breakdown voltage of the sample is measured in the same way as described above. A sample having the same size is folded in the same way as described above.

The insulation breakdown voltage of the resultant folded part is measured in the same way as described above. The insulation breakdown voltage retention after the folding is calculated in accordance with the following equation:

$$\text{Insulation breakdown voltage retention (\%)} = \frac{\text{"Insulation breakdown voltage of the folded part"}}{\text{"Insulation breakdown voltage of the sample that is not yet folded"}} \times 100$$

Relative Permittivity

The relative permittivity was determined by measuring a complex permittivity at a frequency of 1 GHz by the cavity resonator perturbation method and defining its real part as the relative permittivity.

A strip-shaped sample (sample size: 2 mm x 70 mm length) was used for the measurement with a measurement equipment such as a cylindrical cavity resonator ("Network Analyzer N5230C", manufactured by Agilent Technologies, Inc.; "Cavity Resonator 1GHz", manufactured by Kanto Electronic Application and Development Inc.).

Example 1

To a 1000-mL four-necked flask was added 730 g of N-methyl-2-pyrrolidone (NMP), and this system was heated to 70 °C. Thereto were added 189 g of a polyetherimide (PEI) resin (Ultem 1000-1000, manufactured by SABIC Innovative Plastics) and 81 g of a PEI resin (UltemXH-6050, manufactured by SABIC Innovative Plastics). The resultant system was stirred for 5 hours to yield a PEI resin solution (I).

To the resultant PEI resin solution (I) were added polypropylene glycol having a weight-average molecular weight of 400 in an amount of 45 parts by weight for 100 parts by weight of the PEI resin, and 1,10-decanediamine in an amino group molar equivalent of 0.04 per molar equivalent of the imide groups of the PEI resin. These components were stirred to yield a transparent homogenous PEI resin solution (II).

In a comma direct manner, the PEI resin solution (II) was applied onto a PET film, and then the applied solution was dried at 130 °C for 8 minutes to vaporize and remove NMP. Thus, a phase-separated structure having a microphase-separated structure was produced.

The phase-separated structure was put in a 30-L pressure-resistant vessel, and then carbon dioxide was injected thereinto in an atmosphere of 35 °C. The inside thereof was pressurized to 30 MPa.

While this pressure was kept, the vessel was kept as it was for 60 minutes. Thereafter, a carbon dioxide fluid was injected thereinto at a flow rate of about 90 kg/hour until the total use amount of the fluid became 180 kg, and then the fluid was discharged to make an operation of extracting the remaining solvent and polypropylene glycol.

Thereafter, while the atmosphere temperature was set to 85 °C to raise the temperature of the carbon dioxide fluid, 320 kg of a carbon dioxide fluid was further injected thereinto and discharged to conduct an extraction treatment. In this way, a PEI porous body was produced.

Example 2

A PEI porous body was produced in the same way as in Example 1 except that a dimethylsiloxane having both terminals each modified with an amine (KF-8010, manufactured by Shin-Etsu Chemical Co., Ltd.) was added in an amino group molar equivalent of 0.02 per molar equivalent of the imide groups of the PEI resin instead of the addition of 1,10-decanediamine in the amino group molar equivalent of 0.04 per molar equivalent of the imide groups of the PEI resin.

Example 3

A PEI porous body was produced in the same way as in Example 1 except that a dimethylsiloxane having side chains partially substituted with phenyl groups and having both terminals each modified with an amine (X-22-9409, manufactured by Shin-Etsu Chemical Co., Ltd.) was added in an amino group molar equivalent of 0.02 per molar equivalent of the imide groups of the PEI resin instead of the addition of 1,10-decanediamine in the amino group molar equivalent of 0.04 per molar equivalent of the imide groups of the PEI resin.

Comparative Example 1

A PEI porous body was produced in the same way as in Example 1 except that 1,10-decanediamine was not added.

Table 1

| | Example 1 | Example 2 | Example 3 | Comparative Example 1 |
|---|---|---|---|---|
| Polyamine species | 1,10-Decanediamine | KF-8010 | X-22-9409 | - |
| Molar equivalent (mol) of amino groups per mole of imide groups | 0.04 | 0.02 | 0.02 | - |
| Polypropylene glycol (parts by weight) | 45 | 45 | 45 | 45 |
| | | | | |
| Porous body thickness ($\mu$m) | 207 | 189 | 190 | 185 |
| Gel fraction (%) | 68 | 93 | 93 | 0 |
| Average cell diameter ($\mu$m) | 0.24 | 1.7 | 1.7 | 8.8 |
| Volume porosity (%) | 54.3 | 50.1 | 49.3 | 43.8 |
| Cracking frequency (%) | 4 | 0 | 0 | 100 |
| Insulation breakdown voltage (kV/mm) before folding | 74.3 | 41.9 | 48.9 | 28.7 |
| Insulation breakdown voltage (kV/mm) after folding | 62.2 | 34.5 | 43.3 | 15.6 |
| Insulation breakdown voltage retention (%) | 83.7 | 82.3 | 88.5 | 54.4 |
| Relative permittivity | 1.8 | 1.8 | 1.9 | 2.0 |

INDUSTRIAL APPLICABILITY

The porous body of the invention is useful for an electrically insulating sheet integrated into, for example, a motor for automobiles or industries that involves inverter control.

**Claims**

1. A polyetherimide porous body, comprising
   a polyetherimide crosslinked body, and having a gel fraction of 10 % or more, an average cell diameter of 8 $\mu$m or less, a volume porosity of 30 % or more, and an insulation breakdown voltage of 30 kV/mm or more.

2. The polyetherimide porous body according to claim 1,
   wherein the polyetherimide crosslinked body is a crosslinked body in which a polyetherimide is crosslinked with a polyamine having two or more amino groups.

3. The polyetherimide porous body according to claim 1 or 2,
   which has a cracking frequency of 20 % or less, and an insulation breakdown voltage retention of 60 % or more after the porous body is folded, the cracking frequency being represented by the following equation:

$$\text{Cracking frequency (\%)} = \text{``Total crack length in the folded part of the porous body''}/\text{``Length of the folded part''} \times 100.$$

4. The polyetherimide porous body according to any one of claims 1 to 3, which is used as an electrically insulating sheet for a motor.

5. An electrically insulating laminated sheet for a motor, which has a sheet member over at least one surface of the polyetherimide porous body as recited in claim 4.

6. A method for producing the polyetherimide porous body as recited in any one of claims 1 to 4, comprising the steps of:

- applying, over a substrate, a polymer solution comprising the polyetherimide, a phase-separating agent that is phase-separable from the polyetherimide, and a polyamine having two or more amino groups, and drying the applied solution to produce a phase-separated structure having a microphase-separated structure; and
- removing the phase-separating agent from the phase-separated structure to produce the porous body.

**EP 2 933 287 A1**

<table>
<tr><td colspan="2"><strong>INTERNATIONAL SEARCH REPORT</strong></td><td>International application No.<br>PCT/JP2013/082984</td></tr>
</table>

A. CLASSIFICATION OF SUBJECT MATTER
*C08J9/26*(2006.01)i, *B32B5/18*(2006.01)i, *B32B27/34*(2006.01)i, *H01B3/42*(2006.01)i, *H01B17/56*(2006.01)i, *H02K3/30*(2006.01)i

According to International Patent Classification (IPC) or to both national classification and IPC

B. FIELDS SEARCHED

Minimum documentation searched (classification system followed by classification symbols)
C08J9/00-9/42, B32B1/00-43/00, H01B3/42, H01B17/56, H02K3/30

Documentation searched other than minimum documentation to the extent that such documents are included in the fields searched
Jitsuyo Shinan Koho          1922-1996   Jitsuyo Shinan Toroku Koho   1996-2014
Kokai Jitsuyo Shinan Koho    1971-2014   Toroku Jitsuyo Shinan Koho   1994-2014

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2012-182116 A  (Nitto Denko Corp.),<br>20 September 2012 (20.09.2012),<br>entire text<br>& US 2013/0309481 A1     & EP 2672614 A1<br>& WO 2012/105650 A1 | 1-6 |
| A | JP 2011-508017 A  (Sabic Innovative Plastics I.P. B.V.),<br>10 March 2011 (10.03.2011),<br>entire text<br>& US 2009/0163610 A1     & EP 2254740 A1<br>& WO 2009/085688 A1 | 1-6 |

☒ Further documents are listed in the continuation of Box C.          ☐ See patent family annex.

| | |
|---|---|
| *    Special categories of cited documents:<br>"A"   document defining the general state of the art which is not considered to be of particular relevance<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search<br>    20 February, 2014 (20.02.14) | Date of mailing of the international search report<br>    04 March, 2014 (04.03.14) |
|---|---|
| Name and mailing address of the ISA/<br>    Japanese Patent Office | Authorized officer |
| Facsimile No. | Telephone No. |

Form PCT/ISA/210 (second sheet) (July 2009)

**11**

## INTERNATIONAL SEARCH REPORT

| International application No. |
| --- |
| PCT/JP2013/082984 |

C (Continuation).  DOCUMENTS CONSIDERED TO BE RELEVANT

| Category* | Citation of document, with indication, where appropriate, of the relevant passages | Relevant to claim No. |
| --- | --- | --- |
| A | JP 05-310931 A  (Matsushita Electric Works, Ltd.), 22 November 1993 (22.11.1993), entire text & US 5401812 A | 1-6 |

Form PCT/ISA/210 (continuation of second sheet) (July 2009)

**EP 2 933 287 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6322168 A
- JP 10045936 A
- JP 9100363 A
- JP 2001081225 A